# EUROPEAN PATENT SPECIFICATION

(11) **EP 0 850 322 B1**
(45) Date of publication and mention of the grant of the patent: **09.05.2001**
(21) Application number: 96924093.6
(22) Date of filing: 16.07.1996
(51) Int. Cl.: C22B 3/36, C22B 60/02, B01D 11/04, C07D 401/14

(54) **SELECTIVE SEPARATION OF DISSOLVED METAL SPECIES WITH SUBSTITUTED 1,3,5 TRIAZINE EXTRACTANTS**
SELEKTIVE SEPARATION VON GELÖSTEN METALLSPEZIES MIT SUBSTITUIERTEN 1,3,5 TRIAZIN EXTRAKTIONEN
SEPARATION SELECTIVE D'ESPECES METALLIQUES DISSOUTES AVEC DES AGENTS D'EXTRACTION DE TRIAZINE-1,3,5 SUBSTITUTEE

(43) Date of publication of application: 01.07.1998
(73) Proprietor: Commissariat à l'Energie Atomique, 75752 Paris Cedex 15 (FR); The University of Reading, Reading RG5 2AD (GB)
(72) Inventor: HUDSON, Michael, James, Reading RG5 4BD (GB); CHAN, Gabriel, Yee, Shun, Kowloon, Hong Kong (CN); BARON, Pascal, F-30200 Bagnols-sur-Cèze (FR); MADIC, Charles, F-94320 Thiais (FR)
(74) Representative: Des Termes, Monique
(86) International application number: GB9601700
(87) International publication number: WO9802594

(56) References cited:
- EP-A- 0 070 226
- FR-A- 2 607 021
- GB-A- 2 296 917
- US-A- 5 510 091
- CHEMICAL ABSTRACTS, vol. 53, no. 18, 25 September 1959 Columbus, Ohio, US; abstract no. 17146g, XP002027360 & J. AM. CHEM. SOC., vol. 81, 1959, pages 905-906, F.H. CASE AND E. KOFT: "The synthesis of certain substituted 1,3,5-triazines containing the ferroin group"
- CHEMICAL ABSTRACTS, vol. 65, no. 8, 10 October 1966 Columbus, Ohio, US; abstract no. 12205g, XP002027361 & J. ORG. CHEM., vol. 31, no. 7, 1966, pages 2398-2400, FRANCIS H. CASE: "preparation of triazines related to 6-cyano-2,2'-bipyridine"

## Description

The present invention relates to certain 1,3,5-triazines having heterocyclic substituents at the 2,4 and 6-positions, some of which are novel compounds. Typically, the heterocyclic groups may be nitrogen-containing heterocycles such as pyridyl or quinolyl. Generally at least some of the heterocyclic substituents are selected to give the species hydrophobic character. This may be effected by the presence of hydrophobic substituents (e.g. alkyl groups) on the heterocyclic rings. The invention also relates to the synthesis of the triazines and their uses as solvent extraction reagents for the separation of metal-containing species. Use can be made of their hydrophobic nature and their ability to bind directly or through the formation of ion-pairs to metal-containing species. The resulting metal-containing complexes formed by the interaction of the above triazines with the metal-containing complexes may have different chemical and/or physical properties from the original metal-containing species, and these properties may be exploited. Thus a metal species in aqueous solution or suspension may be extracted by reaction with one of the above triazines, followed by solvent extraction to take the species formed into a different, typically organic, phase. With a mixture of metal species in aqueous solution, selectivity of the combination of the metal-containing species with the above triazines followed by solvent extraction can give an improved process for selectively removing a particular metal or class of metals e.g. separation of actinides (An), from lanthanides (Ln). In particular, the separation of trivalent americium [Am(III)] from trivalent europium [Eu(III)] by the above reagents is embodied in this invention.

2,4,6-Tripyridyl-1,3,5-triazine (TPTZ) has previously been suggested for use in separating actinides from lanthanides (FR-A-2509282; EP-A-70266). TPTZ is soluble in water and is not efficiently extractable into an organic phase.

Subtituted 2,4,6-tripyridyl-1,3,5-triazines such as 2,4,6-tris(4-ethyl-2-pyridyl)-1,3,5-triazine, 2H₂O and 2,4,6-tris(4-phenyl-2-pyridyl)-1,3,5-triazine are disclosed in Chemical Abstracts, vol 53, n°18, 25 septembre 1959, Columbus, Ohio, US, Abstract n°17146 g.

The preparation of triazines related to 6-cyano-2,2'-bipyridine such as 2,4,6-tris(2,2'-bipyrid-6-yl)-1,3,5-triazine is disclosed in Chemical Abstracts, vol 65, n°8, 10 october 1999, Columbus, Ohio, US, Abstract n° 12205 g.

The present invention is primarily concerned with the use of triazines having substituents selected so as to improve their hydrophobic and selectivity properties for selective separation of metals.

Thus in a first aspect the invention uses 1,3,5 triazine having a heterocyclic substituent at each of the 2,4 and 6 positions (the three substituents being the same or different). At least 1 or 2 and preferably all of the heterocyclic substituents are selected to give the triazine external hydrophobic character (facilitating extraction into an organic phase) while providing,(together with the triazine nitrogen atoms) a polar interior. Thus a generally polar heterocycle such as pyridine may have one or more hydrophobic substituents e.g. alkyl groups. The invention is also concerned with compounds such as 2,4,6-tripyridyl-1,3,5-triazines wherein one or more of the pyridine rings bears at least one hydrophobic substituent. Other compounds such as (optionally substituted) 2,4,6-triquinoline-1,3,5-triazines are also included. The incorporation of substituents enhances the hydrophobic nature of the above triazines thus improving the solubilities in organic solvents of the triazines themselves and their metal-containing complexes with respect to TPTZ and its metal-containing complexes.

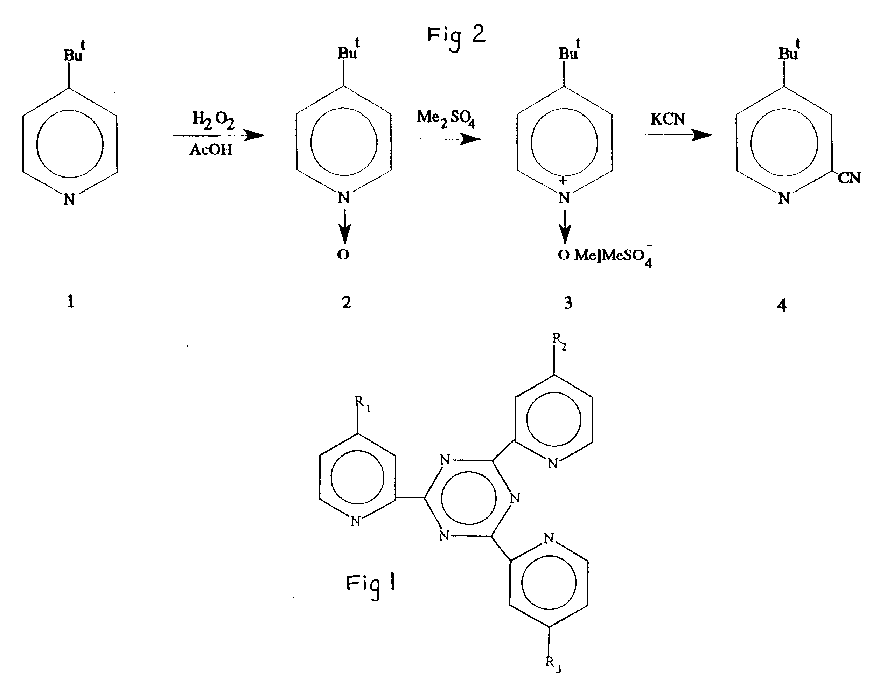

Thus a pyridine-containing compound of this invention may have the general formula depicted in Figure 1 wherein the groups R₁ and R₂ and R₃ are the same or different and may alternatively or additionally be located in the 2, 3 or 5 positions of the pyridine rings. The groups may be alkyl, aryl, substituted aryl, alkoxy or heterocyclic. (Some, but not all, may be hydrogen.)

If the substituents are heterocycles, then these may in turn have (non-heterocyclic) substituents of the types specified for R₁, R₂ and R₃. Thus a molecule tends to present a highly hydrophobic exterior, with an interior containing polar nitrogen atoms which may be suitably disposed for bonding directly through coordination, or indirectly through ion-pair formation, to metal ions.

Embodiments of this invention can,be used for extraction systems to produce compounds and wastes, the organic components of which are completely incineratable. Thus the organic component usually comprises compounds containing C,H, N and oxygen but other elements such as S and P are not specifically excluded.

In a second aspect the invention provides methods for preparing compounds according to the first aspect. A method may employ a step of trimerising a cyano-substituted heterocycle to generate a triazine ring with three heterocyclic substituents. Alternatively or additionally a method may employ a step of introducing hydrophobic substituents into the heterocyclic rings of a tri-(2,4,6-heterocyclic)-1,3,5-triazine, e.g. by free-radical alkylation.

In a third aspect as claimed in claim 1 the invention provides a method for extracting a metal species from a mixture of metal species comprising adding a compound according to the first aspect to the mixture so that it forms a complex with the desired metal species; partitioning the system between organic and inorganic phases; and recovering the metal species from the organic phase.

Some embodiments of the invention will now be described in more detail with reference to the accompanying drawings, in which:
Fig. 1 shows the formula of one class of compound embodying the invention;
Fig. 2 shows a synthetic scheme for converting 4-t-butylpyridine to the 2-cyano-derivative;
Fig. 3 is a scheme showing the trimerisation-cyclization of 2-cyano-4-t-butylpyridine; and
Figs. 4 and 5 are graphs showing the effects of nitric acid concentration and extractant concentration on distribution coefficients.

Typically the triazines may be prepared from the cyclisation of the corresponding cyano compound. E.g. 2,4,6-tri-(4-t-butylpyridyl)-1,3,5-triazine(TtBPTZ), the compound as claimed in claim 12, may be synthesised by cyclisation of the 2-cyano-4-tertbutylpyridine compound. Thus one stage in the preparation may be to prepare the corresponding alkyl cyano compound by alkylation of 2-cyanopyridine. Alternatively, the substituted pyridine may be cyanidised through the N-oxide, as shown in Fig. 2.

### Synthesis of 4-tert-butyl pyridine N-oxide (Compound 2) (See Fig. 2).

Hydrogen peroxide (30%; 2 mol, 250 mL) was carefully added to 4-tert-butyl pyridine (1.48 mol in 320 mL acetic acid). The solution was stirred at 80-90°C for 24h. Additional quantities of hydrogen peroxide (0.7 mol) were added after 6 and 12 h respectively. The cooled mixture was reduced to half its original volume; diluted with water; rendered slightly alkaline with solid NaOH, and extracted with dichloromethane. The organic layer was evaporated to dryness to give compound (2) in 68% yield. It was recrystallised from cyclohexane. M.P. 100°C (lit. value 101°C: Greci et al, J.C.S. Perkin Trans, II (1984) 2013.

### Synthesis of Compound (3)

Equimolar amounts of (2) and dimethylsulphate (1.1 mol) were heated at 86°C for 4h. Compound (3) was isolated by washing with acetone and obtained as a dark brown oil in 98% yield.

### Synthesis of Compound (4)

A cooled ethanolic solution of (3) (1.6 mol in 1 L) was added slowly to a stirred aqueous solution of KCN (4.8 mol) keeping the reaction temperature at -5°C. Cooled water (200 mL) was then added to the mixture and stirred for 4h. The reaction mixture was then extracted with dichloromethane (4x200 mL). The collected extracts were washed with water. The organic layer was separated, dried (Na₂SO₄) and evaporated to dryness by using a steam bath. Compound (4) was obtained in a 65% yield. B.P. 135°C at 1.5 mm Hg. (Found; C, 74.96; H, 7.55; N, 17.48%). M⁺ for (4) has m/z equal to 161.

### Trimerisation of 2-cyano-4-tert-butylpyridine (4) to TtBPTZ

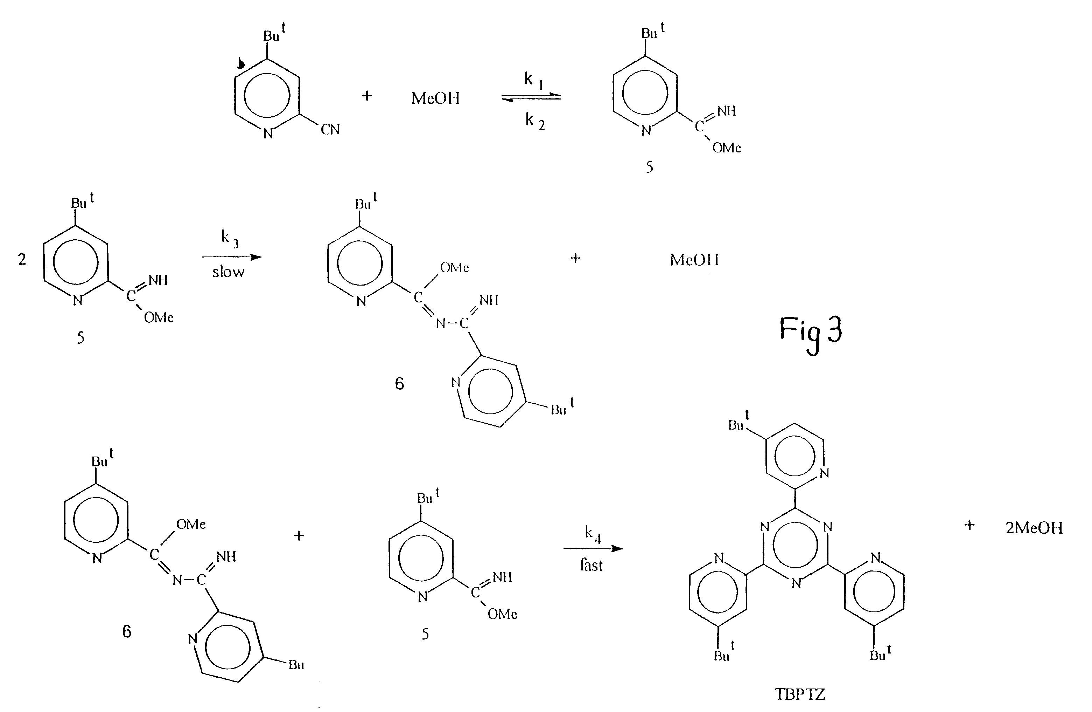

A possible mechanism for the trimerisation/cyclisation of 2-cyano-4-tert-butylpyridine (4) is shown in Figure 3.

The trimerisation of (4) was carried out in a methanolic solution at 65°C with a pressure of about 10 kbar for 6 days. Yields ranged from 5-60% depending on the presence of a suitable ammonium salt with an active hydrogen atom. This increased the rate of formation of TtBPTZ. High pressure cyclisation of (4) to TtPTZ proceeded via the addition of methanol to form a pyridyliminoester (5). Subsequently, in the rate-determining step, (5) dimerised to (6). The dimer (6) then added on a further molecule of the ester (5) to form TtBPTZ.

### Isolation and Characterisation of TtBPTZ

Thin layer chromatography using hexane/diethyl ether (1:1) revealed that four different components were present in the reaction mixture after trimerisation. A flash chromatography column with silica gel as stationary phase was set up to separate the components. The first fraction was isolated by running 100% hexane; the second with hexane/diethyl ether (1:1); the third with 100% diethyl ether and finally the last fraction, of TtBPTZ, with methanol. TtPBTZ was characterised by mass spectrometry; m.pt., FT-IR spectroscopy, elemental analysis and 400 Mhz NMR. M⁺ has m/z = 481 and an accurately measured mass of 480.3002, m.pt. = 85-88°C. The FT-IR spectrum did not have any bands attributable to free CN groups. Found: C,74.11; H, 7.80; N, 17.24; C₃₀H₁₃N₅ requires C, 74.96; H, 7.55; N 17.48%). The 400MHz NMR in deuterochloroform showed ring protons at 2(3H,d):7.58 ppm; 3(3H,d):8.83 pppm; 5(3H,d):8.86 ppm; a-the butyl hydrogens-(27H,s):1.46 ppm.

### Alkylation of TPTZ

Substituents can also be introduced into the heterocyclic rings after formation of the triazine structure. For example, the pyridine rings of TPTZ can be alkylated by free radical alkylation. Alkyl radicals (e.g. .C-(CH₃)₃ or .C₅H₁₁) can be generated by silver-catalysed oxidative decarboxylation of the corresponding carboxylic acid, using peroxydisulphate.

In actual preparations, an aqueous solution of ammonium persulphate (0.04 mole) was added over 10m to a stirred solution of TPTZ (0.008 mole) and silver nitrate (4 X 10⁻⁴ mole) in 10% nitric acid (0.04 mole) at 85°C. After evolution of carbon dioxide had ceased, stirring at 85° was continued for 30m. The solution was poured into an excess of sodium hydroxide solution, and extracted with dichloromethane. The extract was washed and dried. Removal of the solvent afforded an oil which was resolved into its components by thin layer chromatography.

### Separation of Actinides and Lanthanides

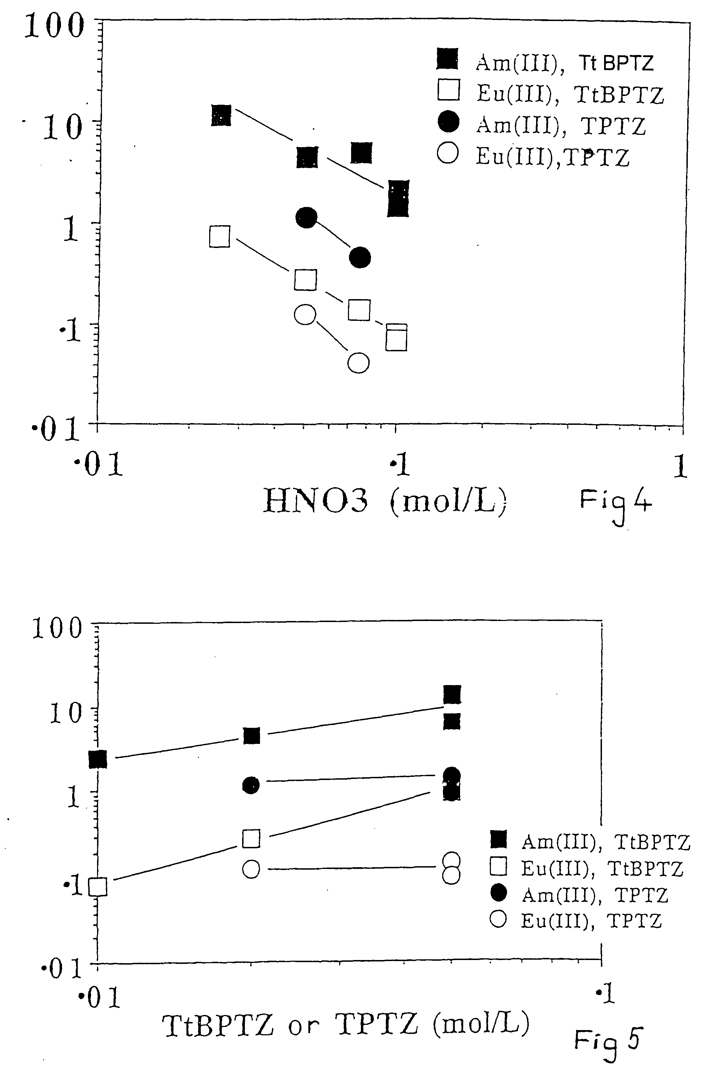

The effectiveness of TPTZ and TtBPTZ for separating Am^{III} from Eu^{III} was investigated. Each experiment used a 2-phase system containing trace amounts of Am^{III} and Eu^{III}, at room temperature. The aqueous phase contained nitric acid in varying amounts. The organic phase contained α-bromocapric acid (1 molar) and varying amounts of TPTZ or TtBPTZ, in TPH (a mixture of branches hydrocarbons, average C₁₂). The results are presented in Table 1 and in Figs 4 and 5.

**TABLE 1**

| Nitric Acid in Aqueous Phase (mol/L) | TPTZ or TtBPTZ (mol/L) | Distribution Coefficient of Am^{III} | | Distribution Coefficient of EU^{III} | | Ratio of Distribution Coefficients Am:EU | |
|---|---|---|---|---|---|---|---|
| | | TPTZ | TtBPTZ | TPTZ | TtBPTZ | TPTZ | TtBPTZ |
| 0,025 | 0,02 | NM | 11,6 | NM | 0,76 | NM | 15,2 |
| 0,05 | 0,01 | NM | 2,4 | NM | 0,085 | NM | 28,2 |
| | 0,2 | 1,2 | 4,5 | 0,13 | 0,28 | 9,2 | 16,1 |
| | 0,05 | 0,92 | 13,1 | 0,1 | 1,0 | 9,2 | 13,1 |
| 0,075 | 0,02 | 0,48 | 4,8 | 0,042 | 0.14 | 11,4 | 34,3 |
| 0,10 | 0,02 | NM | 1,5 | NM | 0,068 | NM | 22,6 |
| 0,15 | 0,05 | NM | 1,7 | NM | 0,062 | NM | 27,4 |
| NM: Not Measured From Table 1, it can clearly be seen that the selectivities for Am(III) are greater with TtBPTZ than TPTZ. | | | | | | | |

Figure 4 shows the variation of distribution coefficient (D) with nitric acid concentration, for systems using 0.02 molar TPTZ or TtBPTZ. The selectivity for Am(III) compared with Eu(III) is noticeably greater at higher acid concentrations for TtBPTZ than TPTZ.

Figure 5 shows the variation of distribution coefficient (D) with the concentration of TPTZ or TtBPTZ, for systems using 0.05 molar nitric acid as the aqueous phase. The separation of Am(III) and EU(III) is much better at low concentrations of TtBPTZ than TPTZ. This implies that the reagent costs may be greatly reduced when TtBPZ is used.

## Claims

1. A method for extracting a metal species from a mixture of metal species comprising adding a triazine compound to the mixture so that it forms a complex with the desired metal species; partitioning the system between organic and inorganic phases; and recovering the metal species from the organic phase; wherein said triazine compound is a 1, 3, 5 triazine having heterocyclic substituents at positions 2, 4, and 6, at least one or the heterocyclic substituents bearing at least one hydrophobic substituent such that the extractability of the compound from an aqueous phase into an organic phase is enhanced.

2. A method according to claim 1 wherein the mixture contains actinide and lanthanide metal species, and the actinide species is/are selectively taken into the organic phase.

3. A method according to claim 2 wherein said metal species are trivalent.

4. A method according to claim 2 wherein said metal species comprise Am(III) and Eu(III).

5. A method according to any preceding claim wherein said heterocyclic substituents are pyridyl groups.

6. A method according to any of claims 1-4 wherein said heterocyclic substituents are provided by quinoline groups, optionally substituted.

7. A method according to any preceding claim wherein said hydrophobic substituent(s) is/are selected from alkyl, aryl, substituted aryl, alkoxy, heterocyclic and substituted heterocyclic groups.

8. A method according to any of claims 1-4 wherein said triazine compound is of formula (I) : 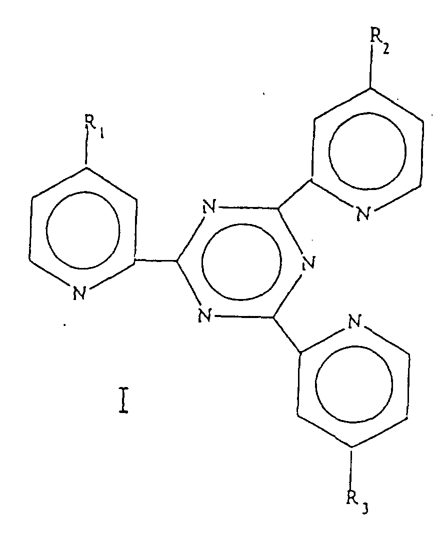 wherein R₁, R₂ and R₃ are alkyl groups.

9. A method according to any preceding claim wherein the triazine compound contains only elements selected from C, H, N and O.

10. A method according to claim 9 wherein said compound is finally destroyed by incineration.

11. A method according to claim 8 wherein R₁, R₂ and R₃ are t-butyl.

12. 1,3,5-triazine of formula (I) : 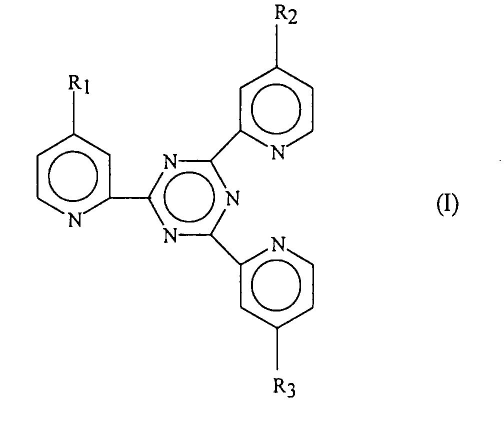 wherein R₁, R₂ and R₃ are tert-butyl.

## Patentansprüche

1. Verfahren zur Extraktion einer Metallspezies aus einer Mischung von Metallspezies, umfassend das Hinzufügen einer Triazin-Verbindung zu der Mischung, so daß sie einen Komplex mit der gewünschten Metallspezies bildet, das Verteilen des Systems zwischen organischer und anorganischer Phase und die Rückgewinnung der Metallspezies aus der organischen Phase,
worin genannte Triazin-Verbindung ein 1,3,5-Triazin ist, welches heterocyclische Substituenten in den Stellungen 2, 4 und 6 hat und mindestens einer der heterocyclischen Substituenten mindestens einen hydrophoben Substituenten trägt, so daß die Extrahierbarkeit der Verbindung aus einer wäßrigen Phase in eine organische Phase erhöht ist.

2. Verfahren nach Anspruch 1, worin die Mischung Actiniden- und Lanthaniden-Metallspezies enthält und die Actinidenspezies selektiv in die organische Phase gebracht wird bzw. werden.

3. Verfahren nach Anspruch 2, worin genannte Metallspezies dreiwertig sind.

4. Verfahren nach Anspruch 2, worin genannte Metallspezies Am(III) und Eu(III) umfassen.

5. Verfahren nach einem der vorhergehenden Ansprüche, worin genannte heterocyclische Substituenten Pyridylgruppen sind.

6. Verfahren nach einem der Ansprüche 1 bis 4, worin genannte heterocyclische Substituenten von gegebenenfalls substituierten Chinolingruppen gebildet werden.

7. Verfahren nach einem der vorhergehenden Ansprüche, worin der genannte heterocyclische Substituent oder die genannten heterocyclischen Substituenten unter Alkyl-, Aryl-, substituierten Aryl-, Alkoxy-, heterocyclischen und substituierten heterocyclischen Gruppen gewählt sind.

8. Verfahren nach einem der Ansprüche 1 bis 4, worin genannte Triazin-Verbindung die Formel (I): 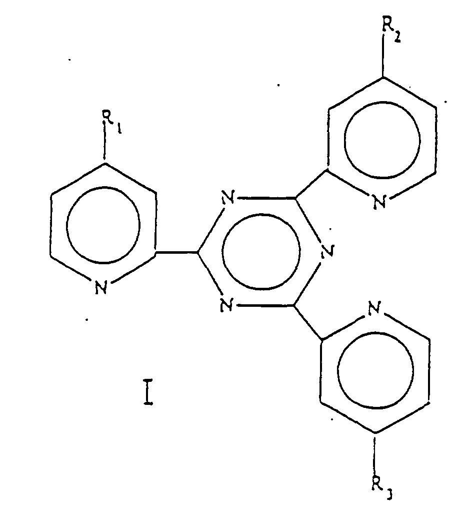 hat, worin R₁, R₂ und R₃ Alkylgruppen sind.

9. Verfahren nach einem der vorhergehenden Ansprüche, worin die Triazin-Verbindung nur Elemente enthält, die unter C, H, N und O gewählt sind.

10. Verfahren nach Anspruch 9, worin die genannte Verbindung schließlich durch Veraschung zerstört wird.

11. Verfahren nach Anspruch 8, worin R₁, R₂ und R₃ t-Butylgruppen sind.

12. 1,3,5-Triazin der Formel (I): 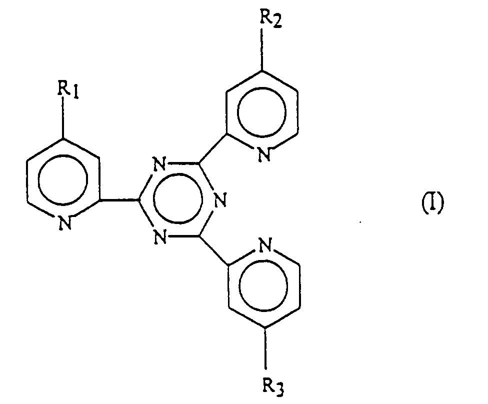 worin R₁, R₂ und R₃ tert-Butylgruppen sind.

## Revendications

1. Procédé pour extraire une espèce métallique d'un mélange d'espèces métalliques, comprenant l'addition d'un composé de triazine au mélange de façon qu'il forme un complexe avec l'espèce métallique souhaitée ; la séparation du mélange entre des phases organique et minérale ; et la récupération de l'espèce métallique à partir de la phase organique ; dans lequel ledit composé de triazine est une 1,3,5-triazine ayant des substituants hétérocycliques en positions 2, 4 et 6, au moins l'un des substituants hétérocycliques portant au moins un substituant hydrophobe tel que l'extractibilité du composé à partir d'une phase aqueuse dans une phase organique soit amplifiée.

2. Procédé selon la revendication 1, dans lequel le mélange contient des espèces métalliques actinides et lanthanides, et la ou les espèces actinides sont sélectivement prises dans la phase organique.

3. Procédé selon la revendication 2, dans lequel lesdites espèces métalliques sont trivalentes.

4. Procédé selon la revendication 2, dans lequel lesdites espèces métalliques comprennent Am(III) et Eu(III).

5. Procédé selon l'une quelconque des revendications précédentes, dans lequel lesdits substituants hétérocycliques sont des groupes pyridyle.

6. Procédé selon l'une quelconque des revendications 1 à 4, dans lequel lesdits substituants hétérocycliques sont apportés par des groupes quinoline, éventuellement substitués.

7. Procédé selon l'une quelconque des revendications précédentes, dans lequel ledit ou lesdits substituants hydrophobes sont choisis parmi les groupes alkyle, aryle, aryle substitué, alcoxy, hétérocycliques et hétérocycliques substitués.

8. Procédé selon l'une quelconque des revendications 1 à 4, dans lequel ledit composé de triazine est de formule (I) : 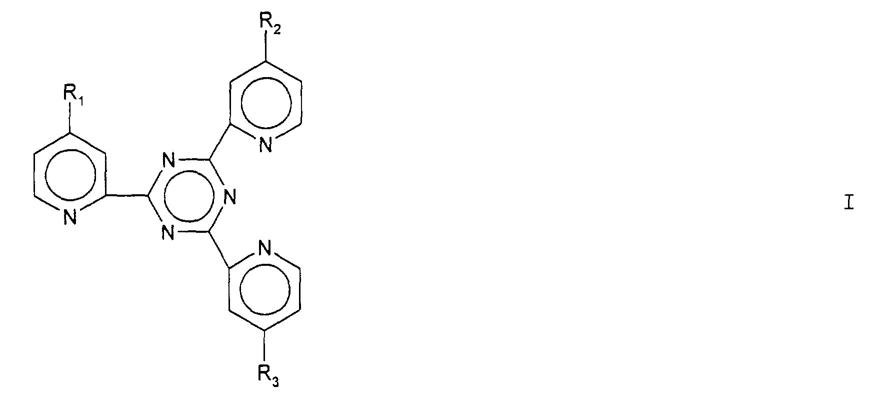 dans laquelle R₁, R₂ et R₃ sont des groupes alkyle.

9. Procédé selon l'une quelconque des revendications précédentes, dans lequel le composé de triazine contient uniquement des éléments choisis parmi C, H, N et O.

10. Procédé selon la revendication 9, dans lequel le composé est finalement détruit par incinération.

11. Procédé selon la revendication 8, dans lequel R₁, R₂ et R₃ sont des groupes tert-butyle.

12. 1,3,5-triazine de formule (I) : 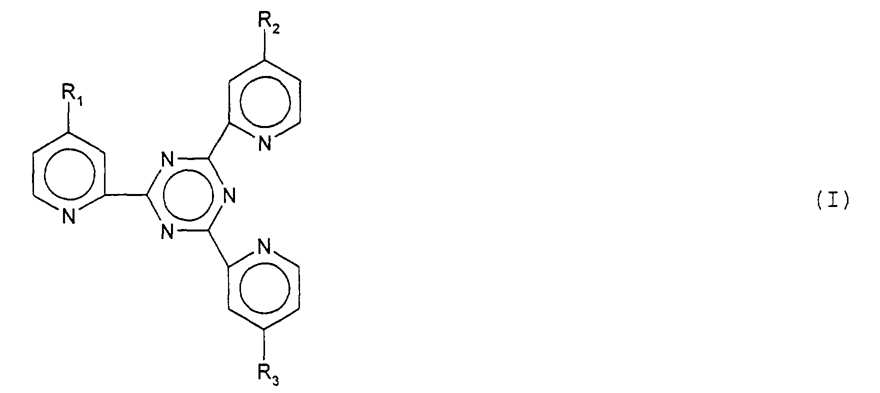 dans laquelle R₁, R₂ et R₃ sont des groupes tert-butyle.
